# FASCICULE DE BREVET EUROPEEN

(11) **EP 3 894 060 B1**
(45) Date de publication et mention de la délivrance du brevet: **07.06.2023**
(21) Numéro de dépôt: 19816724.9
(22) Date de dépôt: 11.12.2019
(51) Int. Cl.: B01F 23/232, B01F 23/451, B01F 25/21, B01F 35/10, B01F 35/21

(54) **DISPOSITIF D'INJECTION DE FLUIDE DANS UN LIQUIDE, PROCÉDÉ DE NETTOYAGE DUDIT DISPOSITIF ET INSTALLATION DE TRAITEMENT D'EFFLUENT**
VORRICHTUNG ZUM EINSPRITZEN VON FLÜSSIGKEIT IN EINE FLÜSSIGKEIT, VERFAHREN ZUR REINIGUNG DIESER VORRICHTUNG UND ABWASSERBEHANDLUNGSANLAGE
DEVICE FOR INJECTING FLUID INTO A LIQUID, METHOD FOR CLEANING SAID DEVICE, AND EFFLUENT TREATMENT INSTALLATION

(30) Priorité: 12.12.2018 FR 1872757
(43) Date de publication de la demande: 20.10.2021
(73) Titulaire: SUEZ Groupe, 92040 Paris la Défense Cedex (FR)
(72) Inventeur: DE FRANCESCHI, Laurent, 68700 CERNAY (FR); RAMOINO, Luca, 8610 USTER (CH); UTTINGER, Walter, 8405 WINTERTHUR (CH); CARRAND, Gilles, 78500 SARTROUVILLE (FR)
(74) Mandataire: Atout PI Laplace
(86) Numéro de dépôt international: PCT/EP2019/084570
(87) Numéro de publication internationale: WO 2020/120536

(56) Documents cités:
- WO-A1-2008/025680
- DE-A1-102009 010 698
- DE-C- 689 083
- US-A- 5 023 021

## Description

### Domaine technique de l'invention

L'invention concerne un dispositif apte à injecter un fluide dans un liquide.

Un tel dispositif d'injection, qui peut dans certains cas être nommé « diffuseur », est particulièrement adapté à des installations dédiées au traitement d'effluents aqueux, en particulier au traitement d'effluents aqueux contenant des boues, et/ou à des installations et procédés mettant en oeuvre des boues pour traiter des effluents aqueux.

### Etat de la technique

L'invention se rapporte au domaine du traitement des eaux et plus particulièrement aux installations et aux procédés de traitement des eaux usées, encore nommées « eaux brutes ». On parlera également dans la présente description d'« effluents aqueux ».

L'invention se rapporte en particulier au traitement d'effluents aqueux contenant des boues activées et/ou à des installations et procédés mettant en oeuvre des boues activées pour traiter des effluents aqueux. Dans la présente description, on parlera également de « boues » pour désigner les « boues activées ».

Une installation de traitement est constituée d'au moins un « réacteur » ou « réacteur principal » dans lequel les boues sont maintenues en suspension et aérées pour traiter l'eau usée. Dans certaines applications, on parle plutôt de « bassin », de « bassin principal », ou encore de « bassin d'aération ».

Une installation de traitement comprend en outre en général des moyens de séparation solide-liquide, qui peuvent comprendre un décanteur secondaire, un clarificateur, une membrane ou tout autre moyen permettant la séparation solide-liquide. Lorsque le moyen de séparation comprend une membrane, celle-ci peut être disposée dans le réacteur principal (ou dans le bassin principal) ou à l'extérieur du réacteur ou du bassin principal (par exemple dans un carter ou dans un bassin dédié à la filtration...). En général, plusieurs membranes sont utilisées, par exemple sous forme d'un ou de plusieurs modules de membranes.

Dans un procédé de type SBR, la séparation solide-liquide est réalisée dans le réacteur ou le bassin principal.

Une installation de traitement comprend enfin des moyens de recirculation des boues vers le réacteur ou le bassin.

Un réacteur ou bassin spécifiquement utilisé avec des boues activées peut être du type :
- bassin d'aération conventionnel (non séquentiel, sans membrane dans le bassin) relié en aval à des moyens de séparation, en général un clarificateur ;
- réacteur biologique séquentiel, plus connu sous le nom anglo-saxon de « sequencing batch reactors » (SBR) intégrant des moyens de séparation solide-liquide ;
- réacteur à membranes ou bioréacteur à membrane, plus connu sous le nom anglo-saxon de Membrane BioReactor (MBR).

Une installation de traitement doit comprendre des moyens pour que l'effluent à traiter soit mis en contact avec un fluide contribuant au traitement dudit effluent. Ces moyens peuvent être disposés dans le réacteur ou le bassin, ou en amont dudit réacteur ou bassin. Le fluide peut être un gaz, un liquide, un mélange de fluides, ou un mélange fluide et solide.

En d'autres termes, pour un traitement optimal des effluents aqueux, il est important de pouvoir disposer de moyens aptes à réaliser :
- le mélange d'au moins un réactif (liquide, mélange liquide/solide dispersé, mélange liquide/gaz dissous) dans un liquide, et/ou
- la dissolution et/ou la diffusion d'un gaz dans un liquide.

Le réactif peut être par exemple du péroxyde d'hydrogène, du permanganate, de l'acide péracétique, ou tout autre composé minéral ou organique, liquide ou gazeux.

Le gaz peut être de l'air, de l'oxygène, des gaz ozonés ou chlorés, par exemple du chlore, du dioxyde de chlore, ou encore de l'ozone.

Le liquide peut être un effluent à traiter, par exemple de l'eau à traiter, et/ou une liqueur mixte de boues biologiques.

Le liquide peut être un liquide moteur (c'est-à-dire un liquide véhiculant au moins un réactif et/ou au moins un gaz apte à contribuer au traitement d'un effluent aqueux). Le liquide moteur est ensuite mélangé à l'effluent à traiter.

Le mélange et/ou la diffusion/dissolution peuvent avoir lieu directement en contact avec l'effluent à traiter et/ou indirectement via un liquide moteur qui est par la suite mélangé avec l'effluent à traiter.

Les dispositifs aptes à réaliser un mélange liquide/liquide comprennent par exemple les mélangeurs dynamiques, de type permettant un brassage mécanique voire hydraulique ou électromagnétique. A titre d'exemple, un mélangeur à hélice à vitesse de rotation élevée peut être mis en place dans un réacteur.

Un inconvénient des mélangeurs dynamiques est qu'ils impliquent des équipements mécaniques dotés d'éléments tournants, et qu'ils nécessitent de ce fait un apport énergétique non négligeable, ainsi que la maintenance desdits équipements.

En outre, ils ne sont généralement pas les mieux adaptés pour la dissolution/diffusion d'un gaz dans un liquide.

Les dispositifs aptes à réaliser un mélange liquide/liquide comprennent également les mélangeurs statiques. De tels mélangeurs peuvent être implantés en tuyauterie pour réaliser un mélange en ligne en amont du réacteur. Il peut s'agir par exemple d'un :
- mélangeur simple, qui est constitué d'une canne d'injection et généralement d'un diaphragme à la sortie de la canne d'injection, ce qui permet d'injecter des réactifs facilement mélangeables : un inconvénient d'un tel dispositif est que le mélange doit s'effectuer sur une grande longueur, équivalente à 50 à 100 fois le diamètre de la tuyauterie selon le mode de réalisation ;
- mélangeur à garnissage, le garnissage étant généralement constitué d'ailettes, de lamelles ou d'hélices à pas inversé, un tel mélangeur permettant d'injecter des réactifs minéraux, des polymères dans des solutions concentrées dont le débit peut ne représenter que 0,01 % du débit d'eau brute (eau à traiter), le mélange est intégral à la sortie du mélangeur après une distance représentant 2 à 6 fois le diamètre de la tuyauterie : un inconvénient d'un tel dispositif est qu'il génère une perte de charge généralement comprise entre 1 et 5 mCE, ce qui limite son utilisation à un faible débit de solution concentrée par rapport au débit d'eau brute. Ce dispositif est également facilement colmatable par des filasses et/ou des dépôts divers ;

- mélangeur à diffusion radiale hydraulique, constitué d'une buse centrée sur l'axe de la tuyauterie et d'un diaphragme à ouverture périphérique, qui permet d'injecter des réactifs minéraux, des polymères, le mélange s'effectuant intégralement sur une longueur inférieure au diamètre de la tuyauterie : un inconvénient d'un tel mélangeur est qu'il est principalement adapté à de l'eau, car il ne permet d'injecter des solutions concentrées que pour de très faibles débits (jusqu'à 0,0005 % du débit d'eau brute) ;
- mélangeur de type cyclonique, davantage adapté au conditionnement des boues, et qui comprend une partie cylindrique avec les arrivées de boues et de réactifs, et d'une partie conique où le mouvement tournant permet de finaliser le mélange, la partie cylindrique comprenant deux déflecteurs réglables. En cas de présence de matières en suspension, ce dispositif peut être sensible à l'abrasion.

Alternativement à une tuyauterie pour réaliser un mélange en ligne en amont du réacteur, les mélangeurs statiques peuvent être implantés dans un canal ouvert pour réaliser un mélange en ligne.

Il peut s'agir d'un mélangeur statique de type injecteur comprenant une canne d'injection ou une grille, utilisant de l'eau de dilution sous pression à un débit représentant 2 à 10 % du débit d'eau brute ; l'eau de dilution destinée à créer la vitesse de sortie lors de la diffusion du réactif est mélangée au réactif quelques mètres avant l'entrée dans le dispositif de traitement de l'eau : un tel mélangeur permet d'injecter des solutions concentrées, le mélange s'effectue intégralement en 10 à 20 secondes mais un inconvénient est la perte de charge qui peut atteindre 1 à 10 mCE.

Il peut s'agir également d'un mélangeur du type hydroéjecteur utilisant un fluide sous pression et l'effet venturi.

Un inconvénient majeur des mélangeurs statiques (mis à part le mélangeur cyclonique) est qu'ils induisent une perte de charge hydraulique, et une perte d'énergie par voie de conséquence, et qu'ils sont très sensibles aux bouchages.

Pour éviter les pertes de charge et phénomènes de bouchage, des unités comprenant un dispositif générateur de vortex ont été mises en oeuvre, comme dans la demande de brevet WO2017202681. Plus précisément, il s'agit d'une installation de traitement des eaux usées, comprenant au moins une première unité de traitement biologique, alimentée par une file d'eau primaire en amont, et l'évacuation de la première unité de traitement biologique est assurée par une file d'eau secondaire et une file de boue en aval, qui comprend en outre une deuxième unité comportant un dispositif générateur de vortex, en communication fluidique avec une ou plusieurs des files. L'installation comprend également un circuit d'apport de fluide additionnel en communication avec une file et/ou avec le dispositif générateur de vortex. Le dispositif générateur de vortex peut être un puits de chute de forme sensiblement cylindrique. Cependant, il ressort de la description, et en particulier des exemples, que la deuxième unité comprenant le dispositif générateur de vortex est disposée en aval de l'unité de traitement (et non en amont), étant par exemple une unité d'épaississement ou de déshydratation de boues, un décanteur, une unité de filtration, un réservoir de contact et de stockage pour la désinfection de l'eau secondaire en aval. Ceci a pour inconvénient que le rendement de mélange peut être moins efficace car il a lieu en situation secondaire et par conséquent pas nécessairement là où il est le plus utile.

Les dispositifs aptes à réaliser la dissolution/diffusion d'un gaz dans un liquide sont en général mis en oeuvre dans une installation de traitement qui utilise un gaz pour contribuer au traitement de l'effluent aqueux, par exemple dans un réacteur d'ozonation. Il peut s'agir par exemple d'un :
- diffuseur poreux, positionné à la base du réacteur qui permet de créer des bulles de gaz, l'eau à traiter circulant à contre-courant du gaz (par exemple, par admission de l'eau à traiter en tête d'une colonne ou d'une chambre d'ozonation), la hauteur d'eau étant généralement comprise entre 5 et 7 m au-dessus des diffuseurs : un inconvénient d'un tel dispositif est la hauteur d'eau nécessaire élevée et le risque de colmatage des pores ;
- tube en U, qui comprend deux tubes concentriques verticaux communiquant en partie basse, le gaz à diffuser, par exemple le gaz ozoné, étant entraîné et dispersé dans l'eau à traiter injectée par une pompe à forte vitesse en flux descendant dans le tube central, la vitesse d'eau et l'augmentation de la pression produisant des bulles de petite taille, l'émulsion créée remontant ensuite dans la partie annulaire ; la pression hydrostatique et le temps de séjour des bulles de gaz sont importants du fait de la hauteur d'eau de l'ordre de 20 mètres et le transfert de gaz est ainsi favorisé : un inconvénient d'un tel système est la hauteur d'eau nécessaire élevée et la présence d'une pompe, ce qui nécessite un apport énergétique non négligeable ainsi qu'une maintenance ;

- mélangeur à garnissage : l'eau à traiter est pulvérisée à contre-courant d'un gaz, par exemple d'un gaz ozoné ; le garnissage contenu dans le corps du réacteur a pour rôle de répartir la phase liquide sous forme de film et de gouttelettes tout au long de son écoulement gravitaire ; ainsi le mouillage des éléments du garnissage développe la surface d'échange gaz-liquide : un inconvénient d'un tel dispositif est le risque de colmatage et la perte de charge associée ;
- diffuseur radial du type, tel que décrit ci-dessus, qui peut être combiné avec un hydroéjecteur : le diffuseur radial éjecte un flux turbulent gaz ozoné / eau créé par l'hydroéjecteur ;
- l'hydroéjecteur du type de celui décrit ci-dessus, en lien ou non avec un diffuseur radial.

Parmi l'ensemble des dispositifs présentés, le diffuseur radial est un équipement efficace, fiable et robuste qui permet à la fois le mélange liquide/liquide, et la dissolution/diffusion d'un gaz dans un fluide moteur puis le mélange de cette solution dans un liquide, lequel est en général différent du fluide moteur.

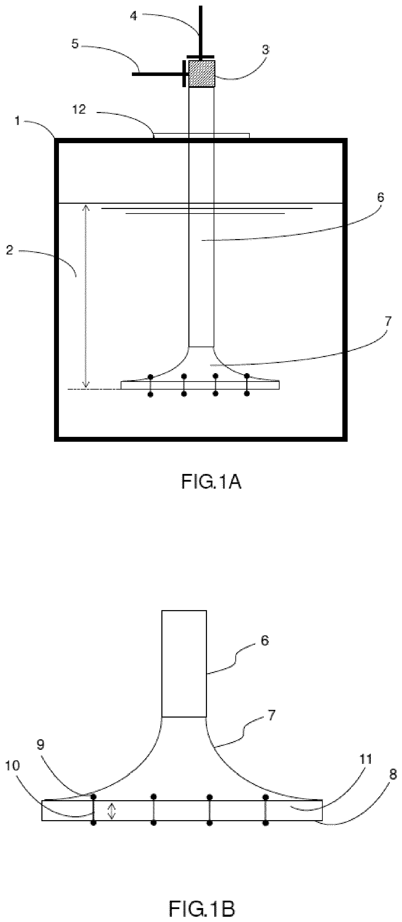

La figure 1A illustre un exemple de diffuseur radial immergé dans un réacteur 1 sous une hauteur de liquide 2. Un système de joint 12 est disposé au niveau du passage du diffuseur dans le réacteur. Le diffuseur comprend un tube de mélange 3 muni en son extrémité supérieure d'une arrivée de fluide moteur 4 et d'une arrivée d'un gaz 5, et dans sa partie inférieure immergée d'un tube de diffusion 6 équipé en son extrémité d'un cône de diffusion 7 qui éjecte et distribue le fluide moteur 4 et/ou le gaz 5 dans le liquide 2.

Dans ce cas, le diffuseur éjecte dans le réacteur soit un mélange de fluide moteur et de gaz, soit seulement le gaz, soit seulement le fluide moteur.

La figure 1B illustre en détail le diffuseur radial. Le cône de diffusion 7 est fixé extérieurement à une plaque plane 8 par une série de boulons 9 munis d'entretoises 10. Les entretoises assurent une section de passage 11 constante pour le gaz 5 et/ou le fluide moteur 4 éjecté dans le liquide 2, cette section étant fixée par la longueur de l'entretoise 10.

L'avantage majeur du diffuseur radial est la faible perte de charges qu'il génère (généralement inférieure à 0,5 mCE), soit plus de 2 à 20 inférieure à celle générée par les mélangeurs statiques (entre 1 et 10 mCE) de type hydroéjecteur. Cela permet entre autres de réduire la consommation d'énergie lors des opérations de dissolution, de diffusion ou de mélange décrits ci-avant.

Un autre avantage d'un diffuseur radial est sa flexibilité de mise en oeuvre. Il peut en effet être immergé dans un réacteur, ou au niveau d'une tuyauterie reliée en amont d'un réacteur.

Lorsqu'il est dans un réacteur, le cône de diffusion peut être orienté en direction de la surface du liquide ou en direction du fond du réacteur. En outre, le cône de diffusion peut être positionné contre le fond du réacteur ou librement suspendu dans le réacteur.

Jusqu'à présent, le diffuseur radial, comme la plupart des dispositifs statiques présentés ci-dessus, n'est pas utilisé dans un milieu contenant une concentration de boue significative. Au contraire, il est utilisé pour de l'eau très peu concentrée en matières solides.

En effet, lorsque le fluide moteur et/ou le liquide à traiter est concentré en matières solides, telles des matières en suspension (pouvant être désignées par « MES » dans la présente description) et/ou déchets fibreux, comme par exemple une liqueur mixte de boues biologiques (avec typiquement des valeurs de matières en suspension supérieures à 1 g/L, ou des valeurs de déchets fibreux supérieures à 20 mg/L), ces dernières s'accrochent et s'accumulent au niveau des boulons et des entretoises. Cela a pour conséquence de réduire au cours du temps la section de passage, voire de l'obturer à terme, d'augmenter de ce fait les pertes de charges générées par le diffuseur et donc la consommation d'énergie, et de réduire son efficacité.

En outre, pour restaurer les performances du diffuseur, il est requis des opérations de nettoyage longues, laborieuses et couteuses, et cela nécessite en particulier :
- l'arrêt du fonctionnement du diffuseur, et plus largement l'immobilisation de l'installation de traitement,
- le nettoyage du diffuseur qui nécessite parfois la ventilation préalable du ciel gazeux du réacteur, la mobilisation d'un dispositif de levage, et qui requiert du temps de nettoyage et de manutention.

Enfin, ces opérations de restauration des performances du diffuseur ne peuvent être réalisées que ponctuellement et en curatif, c'est-à-dire seulement après avoir constaté une augmentation des pertes de charges du diffuseur et/ou une réduction de ses performances techniques. Un tel diffuseur ne permet pas d'anticiper.

Un autre inconvénient du diffuseur connu est l'abrasion progressive des entretoises et/ou des boulons, notamment en présence de sables et plus généralement de matières particulaires minérales, accélérant ainsi son vieillissement.

L'invention vise à surmonter les inconvénients précités de l'état de la technique.

Il est recherché un dispositif d'injection, et notamment de diffusion radiale, d'un fluide dans un liquide qui puisse être mis en oeuvre non seulement avec de l'eau, mais plus spécifiquement en présence d'un fluide plus concentré en solides, notamment en boues, en matières en suspension, en déchets fibreux, et qui puisse surmonter les inconvénients précités de l'art antérieur.

Il est recherché un dispositif d'injection d'un fluide dans un liquide dont les performances ne se dégradent pas, et notamment qui ne s'obture pas dans le temps, qui ne vieillisse pas prématurément, qui ne nécessite pas d'opérations de maintenance fastidieuses, longues et onéreuses.

II serait en outre avantageux de disposer d'un dispositif d'injection dont il est possible de suivre une éventuelle baisse de performance, et notamment de l'anticiper.

Il serait enfin avantageux de disposer d'un dispositif d'injection de conception simple, aisé à mettre en oeuvre, à monter et démonter et qui puisse être installé sur une installation de traitement d'effluents existante.

Le document WO 2008/025680 A1 divulgue un dispositif selon le préambule de la revendication 1.

### Exposé de l'invention

Un premier objet de l'invention permettant d'atteindre ce but est un dispositif d'injection d'un fluide secondaire dans un liquide principal, selon la revendication 1, et comprenant :
- une première partie apte à conduire le fluide secondaire selon une direction sensiblement longitudinale ;
- une deuxième partie apte à éjecter le fluide secondaire du dispositif, de manière à injecter ledit fluide secondaire dans un liquide principal, ladite deuxième partie étant en liaison fluidique avec la première partie et comprenant une extrémité ouverte ;
le dispositif comportant au moins une première position, dite position basse, et une seconde position, dite position haute, et comprenant en outre un moyen de positionnement apte à positionner le dispositif dans une position comprise entre la première position et la seconde position.

Le dispositif selon l'invention présente ainsi au moins deux positions permettant de modifier la section de sortie (ou section d'éjection) du fluide secondaire. Cela permet de réduire de manière significative le risque d'accumulation de solides dans le dispositif et par conséquent de réduire le risque de colmatage du dispositif. Cela permet en outre de réduire le risque d'abrasion et de vieillissement du dispositif.

Selon l'invention, on définit un « dispositif d'injection » comme étant un dispositif apte à injecter un fluide dans un autre fluide, qui est le liquide principal.

Selon un mode de réalisation particulier, le dispositif a également une fonction de diffusion et peut être désigné par le terme « diffuseur », notamment un diffuseur radial.

Le fluide secondaire peut être un liquide, un gaz, un mélange de liquide ou de gaz avec un solide, un mélange liquide gaz, ou toute combinaison liquide(s), gaz, solide(s).

Selon l'invention, on définit les termes « amont » et « aval », « entrée » et « sortie », ou « dessous » et « dessus » par rapport au sens d'écoulement principal du fluide secondaire dans le dispositif.

Selon l'invention, on définit également la direction « longitudinale » (représentée par la direction « Z ») comme étant la direction principale d'écoulement du fluide secondaire dans le dispositif.

On définit alors « transversal » comme étant perpendiculaire à la direction longitudinale, et on définit également une direction « radiale » comme étant une direction radiale dans un plan transversal.

La direction longitudinale peut être la direction verticale. Dans ce cas, le dispositif est utilisé verticalement, et le fluide secondaire peut alors s'écouler du haut vers le bas.

Alternativement, la direction longitudinale peut présenter un angle non nul par rapport à la direction verticale.

La « première position », ou « position basse », est définie comme étant la configuration du dispositif dans laquelle la section de sortie du fluide secondaire est minimale.

La « section de sortie » du fluide secondaire est définie comme étant la somme des toutes les ouvertures disponibles au niveau de l'extrémité ouverte de la deuxième partie du dispositif, autorisant l'éjection du fluide secondaire.

Par « minimale », on entend la plus petite ouverture, donc la plus petite section de sortie du fluide secondaire fournie par le dispositif. Cette section de sortie minimale correspond à la position basse dudit dispositif.

La « seconde position », ou « position haute », est définie comme étant la configuration du dispositif dans laquelle la section de sortie du fluide secondaire du dispositif est maximale.

Par « maximale », on entend la plus grande ouverture, donc la plus grande section de sortie du fluide secondaire fournie par le dispositif. Cette section de sortie minimale correspond à la position haute dudit dispositif.

Le dispositif peut être positionné dans la première ou dans la seconde position, ou dans au moins une position intermédiaire dans laquelle la section de sortie du fluide secondaire est supérieure à la section de sortie minimale et inférieure à la section de sortie maximale.

Selon l'invention, il faut comprendre que la position comprise entre la première position (Z₁) et la seconde position (Z₂) inclut lesdites première et seconde positions.

La première et la seconde partie peuvent être en une seule pièce, ou en deux, voire en plus de deux pièces.

Selon un mode de réalisation, le moyen de positionnement comprend un moyen apte à déplacer longitudinalement la première partie.

Selon un mode de réalisation alternatif, le moyen de positionnement comprend un moyen apte à déplacer longitudinalement la deuxième partie.

Selon un autre mode de réalisation alternatif, le moyen de positionnement comprend un moyen apte à déplacer longitudinalement à la fois la première et la seconde partie.

Selon l'invention, les première et seconde positions sont définies par rapport à une distance entre l'extrémité ouverte de la deuxième partie et une surface de référence disposée dans un plan transversal, une distance minimale correspondant à la première position et une distance maximale correspondant à la seconde position.

Selon l'invention, le terme « distance » entre l'extrémité ouverte de la deuxième partie et une surface de référence est défini comme étant la plus petite distance entre eux selon la direction longitudinale.

Selon l'invention, la distance maximale est comprise entre 3 et 6 cm. Cela permet d'assurer le nettoyage du dispositif tout en maintenant une pression d'injection du fluide secondaire suffisante pour que ledit fluide soit injecté dans le liquide principal de manière suffisamment efficace.

Selon un mode de réalisation, la deuxième partie est configurée de manière à appliquer au fluide secondaire une déviation transversale, essentiellement radiale, à la direction longitudinale. Cela permet d'avoir un dispositif d'injection radiale, et en particulier un dispositif de diffusion radiale.

Selon un mode de réalisation avantageux, la deuxième partie présente une forme conique évasée au niveau de son extrémité ouverte.

Selon un mode de réalisation particulier, l'extrémité ouverte de la deuxième partie présente un premier profil ondulé sous la forme d'une série de crêtes et de creux orientés sensiblement selon la direction longitudinale.

Un tel profil ondulé permet, de manière simple, d'assurer une section de passage minimale pour l'éjection du fluide secondaire, que le dispositif d'injection soit en position haute ou en position basse, tout en supprimant avantageusement la fixation par boulonnage et entretoises des dispositifs de diffusion de l'état de la technique. Cela permet d'éviter des zones d'accrochage et/ou des zones d'accumulation de solides.

En particulier, le premier profil ondulé peut être un profil sensiblement sinusoïdal défini par une première période et une première amplitude. L'amplitude crête à crête du profil sinusoïdal correspond à la différence de hauteur entre une crête et un creux adjacents et est égale à deux fois l'amplitude.

L'avantage d'un profil sinusoïdal est sa facilité de mise en oeuvre et de fabrication. Un autre avantage est d'éviter un risque de dépôt supplémentaire des particules solides.

Selon un mode de réalisation, le dispositif comprend en outre une base présentant une première surface formant la surface de référence et disposée en vis-à-vis de la deuxième partie.

L'extrémité ouverte de la deuxième partie peut être configurée de manière à présenter au moins un point de contact avec la base lorsque le dispositif est dans la première position, tout en autorisant la sortie du fluide secondaire.

Selon un mode de réalisation particulier, la première surface de la base présente un second profil ondulé sous la forme d'une série de crêtes et de creux orientés sensiblement selon la direction longitudinale.

Le dispositif peut comprendre :
- un profil ondulé uniquement sur la première surface de la base, ou
- un profil ondulé uniquement sur l'extrémité ouverte de la deuxième partie du dispositif, ou
- un profil ondulé à la fois sur la première surface de la base et sur l'extrémité ouverte de la deuxième partie du dispositif.

De manière avantageuse, le second profil ondulé peut être configuré pour coopérer avec le premier profil ondulé, de manière à positionner la deuxième partie par rapport à la base et à bloquer les mouvements transversaux de ladite deuxième partie par rapport à ladite base. Cela permet d'améliorer le positionnement de la deuxième partie et de limiter les mouvements latéraux éventuels de ladite seconde partie par rapport à la base et de limiter ainsi notamment l'impact des vibrations éventuelles du dispositif d'injection.

En particulier, le second profil ondulé peut être un profil sensiblement sinusoïdal défini par une seconde période et une seconde amplitude, la seconde période étant sensiblement égale à la première période (du premier profil ondulé) et la seconde amplitude étant inférieure à la première amplitude (du premier profil ondulé).

Selon un mode de réalisation, la base comprend un moyen de centrage disposé en vis-à-vis de la deuxième partie. Ledit moyen de centrage peut également avoir une fonction de déflecteur pour le fluide secondaire, de manière à forcer ledit fluide secondaire à suivre une trajectoire radiale.

Selon un mode de réalisation, le dispositif comprend en outre un support disposé en dessous de la base, de sorte que ladite base est disposée entre le support et la deuxième partie.

Selon un mode de réalisation, le dispositif comprend en outre une partie souple dans la direction longitudinale. Ladite partie souple peut être située au niveau de l'une ou l'autre des première et deuxième parties ou entre la première et la deuxième partie. Une telle partie souple permet de faciliter le déplacement longitudinal du dispositif, notamment son déplacement entre la position basse et la position haute et inversement.

Selon un mode de réalisation, la première partie et la deuxième partie forment une seule pièce.

Selon un mode de réalisation alternatif, la première partie et la deuxième partie sont formés par deux pièces reliées entre elles de manière étanche. Le moyen de liaison peut être une partie souple.

Selon un mode de réalisation, le dispositif comprend en outre un moyen de mesure de la pression à l'intérieur dudit dispositif.

Un second objet de l'invention est un procédé de nettoyage d'un dispositif d'injection comprenant les étapes suivantes :
- une première étape de positionnement du dispositif à une troisième position située au-dessus de la première position et en-dessous ou au niveau de la seconde position ;
- une seconde étape de maintien de la troisième position pendant une durée donnée ;
- une troisième étape de positionnement du dispositif à une quatrième position située en dessous de la troisième position et au-dessus ou au niveau de la première position ;
le fluide étant injecté en continu dans le dispositif pendant au moins l'ensemble desdites étapes.

La troisième position peut être la seconde position ou position haute, ou être une position intermédiaire plus basse que la seconde position et plus haute que la première position ou la quatrième position.

La quatrième position peut être la première position ou position basse, ou être une position intermédiaire plus haute que la première position et plus basse que la seconde position ou la troisième position.

Selon un mode de réalisation, le dispositif d'injection comprend un moyen de mesure de la pression et la première étape de positionnement est enclenchée lorsque la pression mesurée dépasse un seuil de pression maximale, et la seconde étape de maintien est réalisée jusqu'à l'atteinte d'un seuil de pression minimale.

Un troisième objet de l'invention est une installation de traitement d'effluents comprenant un dispositif d'injection selon le premier objet de l'invention.

Selon un mode de réalisation particulier, l'installation de traitement d'effluent comprend un réacteur ou un bassin de traitement dont une surface peut former la surface de référence d'un dispositif d'injection.

### Brève description des figures

D'autres caractéristiques et avantages de l'invention apparaîtront à l'aide de la description qui suit donnée à titre illustratif et non limitatif, faite en regard des figures annexées parmi lesquelles :
La Figure 1 comprend deux figures FIG.1A et FIG.1B illustrant un diffuseur radial de l'état de la technique ;
La Figure 2 illustre un exemple de dispositif d'injection selon l'invention ;
La Figure 3 illustre un détail de l'exemple du dispositif d'injection de la figure 2 ;
La Figure 4 illustre une variante de l'exemple de la figure 3 ;
La Figure 5 comprend quatre figures FIG.5A, FIG.5B, FIG.5C, FIG.5D illustrant l'exemple du dispositif de la figure 3 selon les deux positions basse et haute ;
La Figure 6 illustre un exemple d'utilisation du dispositif d'injection selon l'invention.

### Description détaillée de l'invention

Les figures 1A et 1B ont déjà été décrites dans la partie « Etat de la technique » de la présente description.

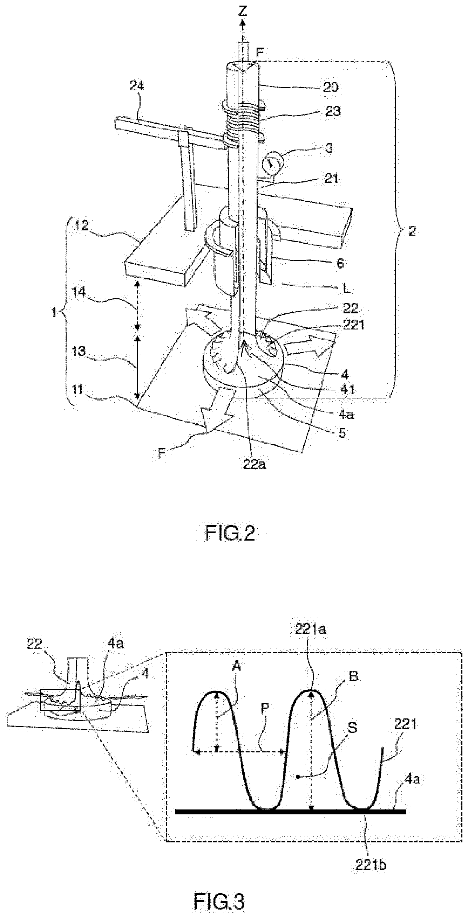

Les figures 2 à 5D illustrent un exemple de dispositif d'injection.

Le dispositif d'injection 2 est adapté pour être intégré dans un réacteur 1 comprenant un plancher 11, un plafond 12 et des parois (non représentées). Le réacteur contient en outre une hauteur 13 de liquide principal L et un ciel gazeux 14 au-dessus dudit liquide principal. Alternativement à un réacteur, il peut s'agir d'un bassin.

Alternativement, le dispositif d'injection peut être disposé en amont d'un réacteur ou d'un bassin.

Le dispositif d'injection comprend une première partie 21 apte à conduire le fluide secondaire F selon une direction sensiblement longitudinale Z. Dans l'exemple représenté, la première partie 21 est une partie d'un tube 20 de conduite.

Le tube 20 de conduite peut être relié en son extrémité supérieure (extrémité non immergée dans le liquide principal L) à un dispositif de mesure de pression 3, par exemple mais pas exclusivement un manomètre.

En outre, la première partie 21 peut comprendre une portion souple 23 selon la direction longitudinale Z. Ladite portion souple peut être un soufflet, notamment un soufflet métallique.

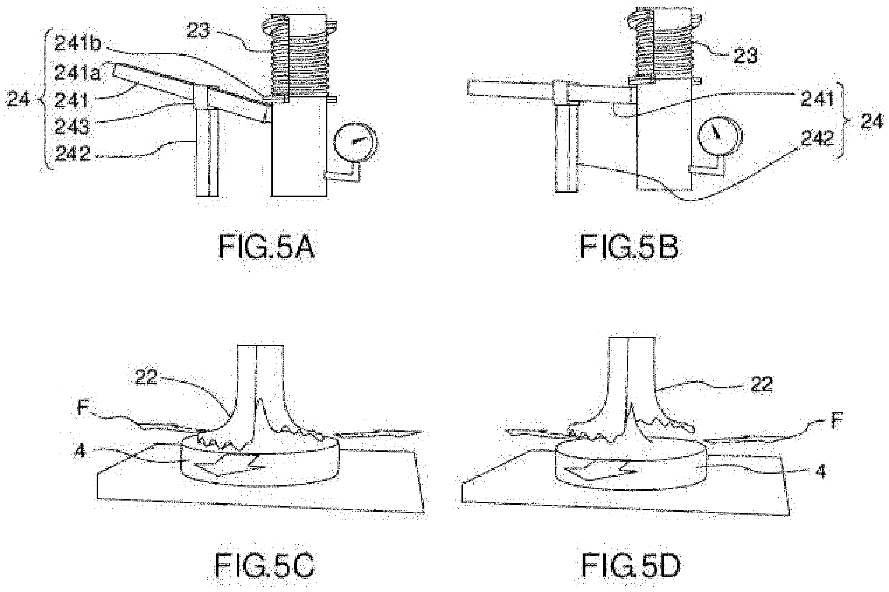

La portion souple 23 représentée est reliée à un moyen de positionnement 24 qui, lorsqu'il est actionné, peut agir sur la longueur de ladite portion souple, permettant un déplacement du dispositif d'injection de quelques centimètres selon l'axe longitudinal Z. Le moyen de positionnement est décrit plus après, en relation avec les figures 5A à 5D.

La seconde partie 22 apte à éjecter le fluide secondaire F ne forme qu'une seule pièce avec la première partie 21. En d'autres termes, le tube 20 est une pièce unique comprenant une première partie apte à conduire le fluide secondaire F et une seconde partie apte à éjecter ledit fluide secondaire.

Selon l'exemple représenté, la seconde partie est un cône ou « cône d'éjection » 22, ledit cône étant apte à être immergé dans le liquide principal L. En d'autres termes, le tube 20 de conduite se termine par une forme conique. Une telle forme conique permet de dévier le fluide secondaire notamment afin de lui imposer une sortie radiale. Alternativement à une forme conique, toute autre forme évasée apte à imposer au fluide secondaire une direction radiale en sortie du tube peut être envisagée, comme par exemple pyramidale, ellipsoïdale ...

Selon l'exemple représenté, le cône d'éjection 22 se termine par un premier profil ondulé 221 sous la forme d'une série de crêtes 221a et de creux 221b orientés sensiblement selon la direction longitudinale Z.

Un exemple de premier profil ondulé 221 est illustré plus en détail en figure 3. Le cône d'éjection se termine par un premier profil ondulé sinusoïdal. Le premier profil sinusoïdal est défini par une première période P et une amplitude A. L'amplitude crête à crête B, qui est l'amplitude entre une crête 221a et un creux 221b adjacents, est égale à deux fois l'amplitude A. La section minimale Sₘᵢₙ d'éjection du fluide secondaire F (correspondant à la section d'éjection lorsque le dispositif est en position basse) est égale à la somme des N aires délimitées par la courbe sinusoïdale (profil du cône) reliant deux creux adjacents et par la droite reliant lesdits creux adjacents, N étant le nombre de creux (ou de crêtes).

Un premier profil ondulé sinusoïdal peut par exemple être défini :
- par un ratio D/N compris entre 10 et 100, préférentiellement entre 20 et 70 ; D étant le diamètre extérieur du cône (en millimètre),
- par une amplitude crête à crête B comprise entre 2 et 20 mm, préférentiellement entre 2 et 10 mm.

Alternativement à un profil de type sinusoïdal, il peut s'agir d'un profil triangulaire, carré, ou de toute autre forme adaptée. Cependant, l'avantage d'un profil sinusoïdal est sa facilité de mise en oeuvre et de fabrication. Un autre avantage est d'éviter un risque de dépôt supplémentaire des particules solides dans le dispositif.

Selon l'exemple représenté, le cône d'éjection 22 est disposé en vis-à-vis d'une base 4, illustrée sous la forme d'une plaque.

La plaque représentée comprend sur sa première surface 4a, ou surface en vis-à-vis du cône d'éjection, une saillie 41 de forme tronconique. Ladite saillie 41 est orientée selon l'axe longitudinal Z et est dirigée vers l'intérieur du cône d'éjection 22. Cela permet le centrage et le maintien en place dudit cône d'éjection dans l'axe longitudinal Z, sans qu'il y ait besoin d'ajouter un moyen spécifique de fixation et/ou de maintien et/ou de centrage au dispositif.

Lorsque le cône d'éjection est en contact avec la plaque 4, seules les parties en creux 221b du profil ondulé 221 sont en contact avec ladite plaque. Dans ce cas, la section totale de sortie du fluide secondaire F correspond à la section minimale Sₘᵢₙ d'éjection dudit fluide secondaire, c'est-à-dire à la somme des N aires délimitées par la courbe sinusoïdale (profil ondulé du cône) reliant deux creux adjacents et par la droite (profil de la plaque) reliant lesdits creux adjacents.

La plaque 4 peut avantageusement être fixée sur un support 5, par exemple un plot. Ledit support peut être positionné sur le plancher 11 du réacteur 1, de manière à surélever le fluide secondaire F par rapport audit plancher. Cela permet notamment de limiter l'abrasion au cours du temps dudit plancher.

La plaque 4 est préférentiellement mais pas exclusivement en acier. Le support 5 est préférentiellement mais pas exclusivement en béton.

Dans le cas où l'étanchéité du réacteur est nécessaire et le confinement du ciel gazeux requis, un moyen d'étanchéité 6, par exemple un joint, peut être disposé entre le tube 20 et le plafond 12 du réacteur. De préférence, le joint est un joint hydraulique. De préférence, le joint est configuré pour assurer une étanchéité entre le dispositif d'injection et le réacteur sous faible pression (typiquement de l'ordre de 0,02 à 0,03 bar, par exemple mais pas exclusivement) tout en autorisant la mobilité du dispositif d'injection selon l'axe longitudinal. Le joint permet ainsi d'éviter des fuites de gaz dans l'atmosphère.

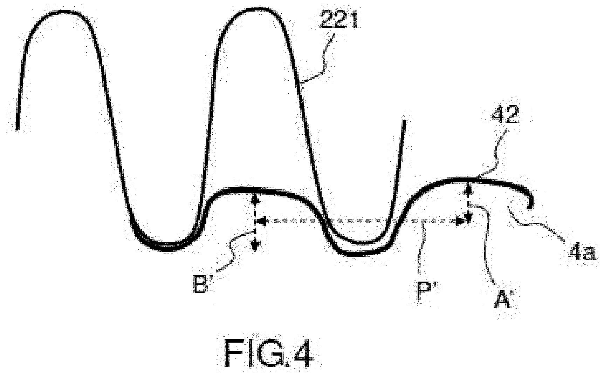

La figure 4 représente une variante de plaque 4 comportant sur sa première surface 4a (surface en vis-à-vis du cône d'éjection 22), un second profil ondulé 42 de type sensiblement sinusoïdal dont la seconde période P' est sensiblement égale à la première période P (période du profil ondulé du cône d'éjection) et dont l'amplitude A' est inférieure à la première amplitude A (amplitude du profil ondulé du cône d'éjection).

Cela permet d'améliorer le positionnement du cône d'éjection et de limiter les mouvements latéraux éventuels dudit cône par rapport à la plaque et de limiter ainsi notamment l'impact des vibrations éventuelles du dispositif d'injection. Cela permet en outre de se dispenser d'une saillie 41.

Dans ce cas, la section minimale S'ₘᵢₙ d'éjection du fluide secondaire (correspondant à la section d'éjection lorsque le dispositif est en position basse), est égale à la somme des N aires délimitées par la courbe sinusoïdale (profil ondulé du cône) reliant deux creux adjacents et par la courbe sensiblement sinusoïdale (profil ondulé de la plaque) reliant lesdits creux adjacents. La surface S'ₘᵢₙ est inférieure à la surface Sₘᵢₙ.

Le profil périphérique ondulé du cône d'éjection permet, de manière simple, d'assurer une section de passage minimale Sₘᵢₙ ou S'ₘᵢₙ pour l'éjection du fluide secondaire, que le dispositif d'injection soit en position haute ou en position basse, tout en supprimant avantageusement la fixation par boulonnage et entretoises des dispositifs de diffusion de l'état de la technique. Cela permet d'éviter des zones d'accrochage et/ou des zones d'accumulation de solides, par exemple des déchets fibreux.

En outre, le dispositif de l'invention comprend des moyens pour permettre un déplacement selon l'axe longitudinal du cône d'éjection par rapport à la base. Cela permet de modifier la distance entre le cône d'éjection et la base, ce qui a pour conséquence de modifier la section de passage du fluide secondaire.

De préférence, le cône d'éjection peut s'écarter de la base d'une distance variant entre 3 cm et 6 cm, de manière à permettre d'assurer le nettoyage du dispositif tout en maintenant une pression d'injection du fluide secondaire suffisante pour que ledit fluide soit injecté dans le liquide principal de manière suffisamment efficace.

Les figures 5A à 5D illustrent deux positions du dispositif d'injection. Les figures 5A et 5B illustrent le moyen de positionnement (Fig. 5A) et le positionnement du cône d'éjection (Fig. 5B) en position basse ou position dite « plaquée » qui est une position nominale du dispositif en fonctionnement. Les figures 5C et 5D illustrent le moyen de positionnement (Fig. 5C) et le positionnement du cône d'éjection (Fig. 5D) en position haute ou position dite « relevée » qui est une position de nettoyage (ou décolmatage) du dispositif.

Le moyen de positionnement 24 est configuré pour agir sur la portion souple 23 du tube, permettant de soulever ou de baisser le cône d'éjection 22, sans que cela nécessite d'arrêter la circulation du fluide secondaire dans le dispositif et l'éjection dudit fluide dans le liquide principal. Ainsi, la circulation non interrompue du fluide secondaire permet le nettoyage du dispositif d'injection, permet de ne pas diminuer de manière drastique (voire d'annuler comme cela peut se passer en cas de colmatage) la vitesse d'éjection dudit fluide. Cela permet en particulier l'élimination des boues et déchets fibreux qui peuvent s'accumuler dans le dispositif, notamment dans le cône d'injection, et d'éviter le colmatage.

Le moyen de positionnement 24 représenté est un système de type levier qui comprend une barre fixe 242 s'étendant sensiblement selon la direction longitudinale et reliée au plafond 12 du réacteur, et un bras de levier 241 relié à ladite barre fixe en un point de pivot 243 et à la portion souple 23 en une première extrémité 241a. Pour soulever le dispositif, il suffit d'actionner le bras de levier 241 en appuyant sur la seconde extrémité 241b dudit bras. Cela permet de comprimer la portion souple 23 de manière à soulever le tube de conduite 20 et donc le cône d'éjection 22. Le déplacement longitudinal du cône correspond à la compression de la portion souple.

Le déplacement longitudinal du dispositif de l'invention est ainsi très facile à réaliser. Par conséquent les opérations de nettoyage sont très aisées à réaliser, et peuvent être réalisées sans interrompre les opérations de traitement d'effluents. Cela peut se faire de manière automatique, par exemple en connectant la seconde extrémité du bras de levier à un automate.

Alternativement à ce système, un autre système de type levier peut être envisagé ou encore un autre moyen de positionnement remplissant la même fonction, par exemple un système magnétique ou une motorisation (électrique, pneumatique...), voire simplement manuellement.

Le moyen de positionnement peut agir sur la première partie ou sur la deuxième partie du dispositif d'injection, ou à la fois sur les deux parties.

Selon un mode de réalisation, on peut déclencher un procédé de nettoyage (manuellement et/ou automatiquement) du dispositif d'injection de manière régulière, notamment de manière préventive. Par exemple, on peut prévoir de mettre en oeuvre un procédé de nettoyage chaque jour d'utilisation du dispositif, ou toutes les semaines. La fréquence de nettoyage peut être adaptée selon les paramètres d'utilisation du dispositif et/ou selon la qualité des effluents traités.

Selon un mode de réalisation alternatif ou complémentaire, on peut déclencher un procédé de nettoyage (manuellement et/ou automatiquement) du dispositif d'injection de manière curative.

Que ce soit en mode préventif ou en mode curatif, un procédé de nettoyage peut être déclenché en fonction de la pression dans ledit dispositif d'injection, par exemple lorsque la pression mesurée dans ledit dispositif est supérieure à un seuil de pression maximal défini par l'opérateur. Dans ce cas, le dispositif d'injection comprend un moyen de mesure de pression, par exemple mais pas exclusivement un manomètre.

Le dispositif d'injection de l'invention peut être utilisé pour le traitement d'effluents, typiquement dans un réacteur ou un bassin de traitement, plus généralement dans toute installation de traitement d'effluent. Le dispositif d'injection peut également être utilisé en dehors, par exemple en amont d'un réacteur ou d'un bassin.

Le dispositif d'injection peut être utilisé :
- pour la dissolution et/ou la diffusion d'un gaz (fluide secondaire) dans un liquide principal, et/ou
- le mélange d'un liquide (fluide secondaire) dans un liquide principal, et/ou
- la dissolution et/ou la diffusion d'un mélange gaz/liquide (fluide secondaire) dans un liquide principal.

En outre, le fluide secondaire peut être chargé en particules solides.

Le gaz peut être de l'air, de l'oxygène, des gaz ozonés ou chlorés, par exemple du chlore, du dioxyde de chlore, ou encore de l'ozone ...

Le liquide principal peut être un effluent à traiter, par exemple un effluent aqueux.

Le fluide secondaire peut comprendre une liqueur mixte de boues biologiques.

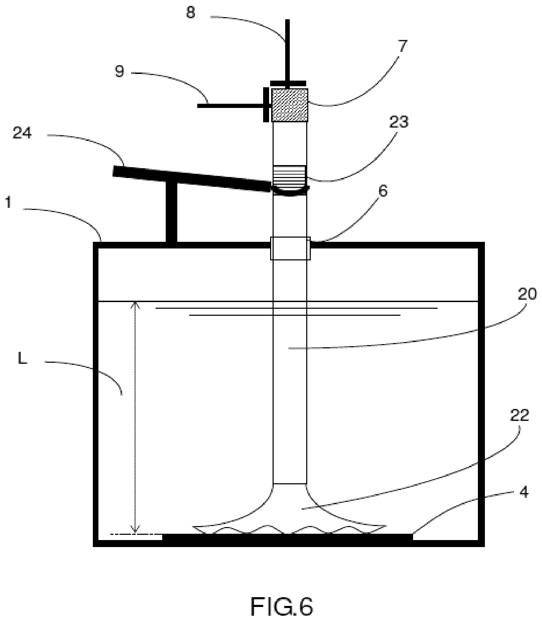

La figure 6 illustre un exemple d'utilisation du dispositif d'injection comprenant un tube 20 et un cône 22 en bout du tube et qui permet la dissolution par diffusion d'un gaz ozoné dans une liqueur mixte biologique en tant que liquide moteur, le mélange gaz liqueur / mixte étant le fluide secondaire qui est ensuite mélangé à l'effluent à traiter (liquide principal L) en sortie du dispositif d'injection dans le réacteur 1. Le dispositif d'injection repose sur une base 4 au fond du réacteur.

Le dispositif d'injection comprend un mélangeur 7 connecté à une arrivée de liquide moteur 8 et à une arrivée de gaz 9.

Le débit de gaz est par exemple de 25 kg O2/O3.h⁻¹ et le débit de liqueur est par exemple de 25 m3/h. Le fluide secondaire présente ainsi un rapport gaz sur liqueur mixte de 1 kg gaz / m³ de liquide.

La liqueur mixte biologique peut être caractérisée par :
- une concentration en MES comprise entre 1 et 15 g/L, par exemple de 3,1 g/L ; et/ou
- un taux de matières volatiles comprise entre 50 et 95 %, par exemple 77% ; et/ou
- une concentration en déchet fibreux supérieure à 20 mg/L, par exemple 138 mg/L ; et/ou
- la présence de sable, notamment de micro-sable, par exemple du micro-sable dont 90% présente une granulométrie inférieure 0,2 mm.

Ainsi, le fluide moteur peut être particulièrement concentré en matières solides, présenter un pouvoir colmatant et peut en outre présenter un pouvoir abrasif.

A titre d'illustration et non limitatif, le dispositif illustré en figure 6 peut présenter notamment les caractéristiques suivantes :
- La longueur du tube de conduite 20 est de 5 m et son diamètre intérieur 100 mm (DN 100).
- Le tube est immergé dans un réacteur sous 4,5 mètres de liquide principal L et un ciel gazeux de 50 cm.
- Le diamètre D du cône d'éjection 22 est de 25 cm.
- Le nombre de crêtes (ou nombre d'ondulations) N du profil du cône est de 8.
- Le rapport D (mm) sur N est ainsi de 31,25.
- L'amplitude crête à crête B est de 2,5 mm.
- La base 4 a un profil plat.

Cette configuration du cône permet d'obtenir une section de passage de 9,8.10⁻⁴ m² et une vitesse d'éjection de 9,6 mis lorsque le dispositif est en position basse.

Il ressort de tout ce qui précède que le dispositif d'injection selon l'invention peut être utilisé avec des milieux chargés en matières solides (boues, matières en suspension, déchets fibreux ...), comme typiquement une liqueur mixte biologique. Par exemple, la concentration en matières en suspension peut être supérieure à 1g/L. Le dispositif d'injection selon l'invention peut également être utilisé dans des milieux chargés en matières abrasives comme du sable et/ou des limons.

Le dispositif d'injection présente en outre les avantages suivants :
- facilité de fabrication (absence de soudures difficiles à réaliser et donc potentiellement plus sensibles à la corrosion) ;
- facilité d'implantation dans un réacteur ou un bassin existant ;
- facilité de montage et de démontage (pas de boulonnage, ni d'entretoises);
- facilité d'utilisation ;
- robustesse, avec notamment le maintien des performances techniques et énergétiques du dispositif ;
- réduction significative du risque d'accumulation de solides, (boues, déchets fibreux ...) dans le dispositif et par conséquent réduction du risque de colmatage du dispositif ;
- réduction du risque d'abrasion et de vieillissement du dispositif ;
- capacité à réaliser des opérations de maintenance (nettoyage, décolmatage ...) :
- sans interruption du fonctionnement du dispositif, du réacteur ou du bassin et plus largement de l'installation de traitement,
- manuellement ou automatiquement,
- de manière curative et/ou préventive.

## Revendications

1. Dispositif (2) d'injection d'un fluide secondaire (F) dans un liquide (L) principal comprenant :
- une première partie (21) apte à conduire le fluide secondaire (F) selon une direction sensiblement longitudinale (Z) ;
- une deuxième partie (22) apte à éjecter le fluide secondaire (F) du dispositif, de manière à injecter ledit fluide secondaire dans un liquide principal (L), ladite deuxième partie étant en liaison fluidique avec la première partie (21) et comprenant une extrémité (22a) ouverte ;
le dispositif comportant au moins une première position (Z1), dite position basse, et une seconde position (Z2) dite position haute, et comprenant en outre un moyen de positionnement (24) apte à positionner le dispositif dans une position comprise entre la première position (Z1) et la seconde position (Z2),
les première et seconde positions étant définies par rapport à une distance (D) entre l'extrémité ouverte de la deuxième partie (22) et une surface de référence (4a) disposée dans un plan transversal, une distance minimale (Dₘᵢₙ) correspondant à la première position (Z₁) et une distance maximale (Dₘₐₓ) correspondant à la seconde position (Z₂), **caractérisé en ce que** la distance maximale (Dₘₐₓ) étant comprise entre 3 et 6 cm.

2. Dispositif (2) selon la revendication 1, la deuxième partie (22) étant configurée de manière à appliquer au fluide secondaire (F) une déviation transversale, essentiellement radiale, à la direction longitudinale (Z).

3. Dispositif (2) selon la revendication 2, la deuxième partie (22) présentant une forme conique évasée au niveau de son extrémité ouverte (22a).

4. Dispositif (2) selon la revendication 3, l'extrémité ouverte (22a) de la deuxième partie (22) présentant un premier profil ondulé (221) sous la forme d'une série de crêtes et de creux orientés sensiblement selon la direction longitudinale.

5. Dispositif (2) selon la revendication 4, le premier profil ondulé étant un profil sensiblement sinusoïdal défini par une première période (T) et une première amplitude (A).

6. Dispositif (2) selon l'une des revendications précédentes, le dispositif comprenant une partie souple (23) dans la direction longitudinale (Z).

7. Dispositif (2) selon l'une des revendications précédentes, la première partie (21) et la deuxième partie (22) formant une seule pièce.

8. Dispositif (2) l'une des revendications 1 à 6, la première partie (21) et la deuxième partie (22) étant formés par deux pièces reliées entre elles de manière étanche.

9. Dispositif (2) selon l'une des revendications précédentes, comprenant en outre un moyen de mesure (3) de la pression (P) à l'intérieur dudit dispositif.

10. Dispositif (2) selon l'une des revendications 1 à 9, comprenant en outre une base (4) présentant une première surface (4a) formant la surface de référence et disposée en vis-à-vis de la deuxième partie (22).

11. Dispositif (2) selon la revendication 10, l'extrémité ouverte (22a) de la deuxième partie (22) étant configurée de manière à présenter au moins un point de contact avec la base (4) lorsque le dispositif est dans la première position (Z1), tout en autorisant la sortie du fluide secondaire (F).

12. Procédé de nettoyage d'un dispositif d'injection selon l'une des revendications 1 à 11 comprenant les étapes suivantes :
- une première étape de positionnement du dispositif à une troisième position (Z3) située au-dessus de la première position (Z1) et en-dessous ou au niveau de la seconde position (Z2) ;
- une seconde étape de maintien de la troisième position (Z3) pendant une durée donnée (t) ;
- une troisième étape de positionnement du dispositif à une quatrième position (Z4) située en dessous de la troisième position (Z3) et au-dessus ou au niveau de la première position (Z1) ;
le fluide (F) étant injecté en continu dans le dispositif (2) pendant au moins l'ensemble desdites étapes.

13. Procédé selon la revendication 12, le dispositif d'injection (2) comprenant un moyen de mesure (3) de la pression (P), la première étape de positionnement étant enclenchée lorsque la pression mesurée (P) dépasse un seuil de pression maximale (Pmax), et la seconde étape de maintien étant réalisée jusqu'à l'atteinte d'un seuil de pression minimale (Pmin).

14. Installation de traitement d'effluent comprenant un dispositif d'injection (2) selon l'une quelconque des revendications 1 à 11.

15. Installation de traitement d'effluent comprenant un dispositif d'injection (2) selon l'une quelconque des revendications 1 à 9, et un réacteur (1) ou un bassin de traitement, la surface de référence (4a) étant formée par une surface dudit réacteur ou dudit bassin.

## Patentansprüche

1. Vorrichtung (2) zum Einspritzen eines Sekundärfluids (F) in eine Hauptflüssigkeit (L), Folgendes umfassend:
- einen ersten Teil (21), der in der Lage ist, das Sekundärfluid (F) entlang einer im Wesentlichen längsgerichteten Richtung (Z) zu leiten;
- einen zweiten Teil (22), der in der Lage ist, das sekundäre Fluid (F) aus der Vorrichtung auszustoßen, um das sekundäre Fluid in eine Hauptflüssigkeit (L) einzuspritzen, wobei der zweite Teil mit dem ersten Teil (21) in Fluidverbindung steht und ein offenes Ende (22a) umfasst;
wobei die Vorrichtung mindestens eine erste Position (Z1), die als untere Position bezeichnet wird, und eine zweite Position (Z2), die als obere Position bezeichnet wird, aufweist, und ferner ein Positionierungsmittel (24) umfasst, das in der Lage ist, die Vorrichtung in einer Position zwischen der ersten Position (Z1) und der zweiten Position (Z2) zu positionieren,
wobei die erste und die zweite Position in Bezug auf einen Abstand (D) zwischen dem offenen Ende des zweiten Teils (22) und einer in einer Querebene angeordneten Bezugsfläche (4a) definiert sind, wobei ein minimaler Abstand (Dₘᵢₙ) der ersten Position (Z₁) entspricht und ein maximaler Abstand (Dₘₐₓ) der zweiten Position (Z₂) entspricht, **dadurch gekennzeichnet, dass** der maximale Abstand (Dₘₐₓ) zwischen 3 und 6 cm liegt.

2. Vorrichtung (2) nach Anspruch 1, wobei der zweite Teil (22) so konfiguriert ist, dass er dem Sekundärfluid (F) eine transversale, im Wesentlichen radiale Abweichung von der Längsrichtung (Z) auferlegt.

3. Vorrichtung (2) nach Anspruch 2, wobei der zweite Teil (22) eine konische Form aufweist, die an ihrem offenen Ende (22a) aufgeweitet ist.

4. Vorrichtung (2) nach Anspruch 3, wobei das offene Ende (22a) des zweiten Teils (22) ein erstes Wellenprofil (221) in Form einer Reihe von Kämmen und Tälern aufweist, die im Wesentlichen entlang der Längsrichtung ausgerichtet sind.

5. Vorrichtung (2) nach Anspruch 4, wobei das erste Wellenprofil ein im Wesentlichen sinusförmiges Profil ist, das durch eine erste Periode (T) und eine erste Amplitude (A) definiert ist.

6. Vorrichtung (2) nach einem der vorhergehenden Ansprüche, wobei die Vorrichtung in der Längsrichtung (Z) einen flexiblen Teil (23) umfasst.

7. Vorrichtung (2) nach einem der vorhergehenden Ansprüche, wobei der erste Teil (21) und der zweite Teil (22) einstückig gebildet sind.

8. Vorrichtung (2) nach einem der Ansprüche 1 bis 6, wobei der erste Teil (21) und der zweite Teil (22) durch zwei dicht miteinander verbundene Teile gebildet werden.

9. Vorrichtung (2) nach einem der vorhergehenden Ansprüche, ferner umfassend ein Mittel (3) zum Messen des Drucks (P) im Inneren der Vorrichtung.

10. Vorrichtung (2) nach einem der Ansprüche 1 bis 9, ferner umfassend eine Basis (4) mit einer ersten Oberfläche (4a), welche die Referenzfläche bildet und gegenüber dem zweiten Teil (22) angeordnet ist.

11. Vorrichtung (2) nach Anspruch 10, wobei das offene Ende (22a) des zweiten Teils (22) so konfiguriert ist, dass es mindestens einen Kontaktpunkt mit der Basis (4) aufweist, wenn sich die Vorrichtung in der ersten Position (Z1) befindet, während es gleichzeitig den Austritt des Sekundärfluids (F) zulässt.

12. Verfahren zum Reinigen einer Einspritzvorrichtung nach einem der Ansprüche 1 bis 11, folgende Schritte umfassend:
- einen ersten Schritt des Positionierens der Vorrichtung in einer dritten Position (Z3), die oberhalb der ersten Position (Z1) und unterhalb oder auf Höhe der zweiten Position (Z2) liegt;
- einen zweiten Schritt des Haltens der dritten Position (Z3) für eine gegebene Zeitdauer (t);
- einen dritten Schritt des Positionierens der Vorrichtung in einer vierten Position (Z4), die unterhalb der dritten Position (Z3) und oberhalb oder auf Höhe der ersten Position (Z1) liegt;
wobei das Fluid (F) während mindestens aller Schritte kontinuierlich in die Vorrichtung (2) eingespritzt wird.

13. Verfahren nach Anspruch 12, wobei die Einspritzvorrichtung (2) ein Mittel (3) zum Messen des Drucks (P) umfasst, wobei der erste Positionierungsschritt eingeleitet wird, wenn der gemessene Druck (P) einen maximalen Druckschwellenwert (Pmax) überschreitet, und der zweite Schritt des Haltens bis zum Erreichen eines minimalen Druckschwellenwerts (Pmin) durchgeführt wird.

14. Abwasseraufbereitungsanlage, umfassend eine Einspritzvorrichtung (2) nach einem der Ansprüche 1 bis 11.

15. Abwasseraufbereitungsanlage, umfassend eine Einspritzvorrichtung (2) nach einem der Ansprüche 1 bis 9, und einen Behandlungsreaktor (1) oder ein -becken, wobei die Referenzfläche (4a) durch eine Oberfläche des Reaktors oder des Beckens gebildet wird.

## Claims

1. A device (2) for injecting a secondary fluid (F) into a main liquid (L), comprising:
- a first part (21) able to convey the secondary fluid (F) in a substantially longitudinal direction (Z);
- a second part (22) able to eject the secondary fluid (F) from the device, so as to inject said secondary fluid into a main liquid (L), said second part being in fluid communication with the first part (21) and comprising an open end (22a);
the device having at least a first position (Z1), referred to as lower position, and a second position (Z2), referred to as upper position, and further comprising a positioning means (24) able to position the device in a position between the first position (Z1) and the second position (Z2),
the first and second positions being defined relative to a distance (D) between the open end of the second part (22) and a reference surface (4a) disposed in a transverse plane, a minimum distance (Dₘᵢₙ) corresponding to the first position (Z₁) and a maximum distance (Dₘₐₓ) corresponding to the second position (Z₂), **characterised in that** the maximum distance (Dₘₐₓ) ranges between 3 and 6 cm.

2. The device (2) according to claim 1, the second part (22) being configured so as to apply, to the secondary fluid (F), a deflection that is transverse and essentially radial to the longitudinal direction (Z).

3. The device (2) according to claim 2, the second part (22) having a conical shape that is flared at its open end (22a).

4. The device (2) according to claim 3, the open end (22a) of the second part (22) having a first corrugated profile (221) in the form of a series of peaks and troughs substantially oriented in the longitudinal direction.

5. The device (2) according to claim 4, the first corrugated profile being a substantially sinusoidal profile defined by a first period (T) and a first amplitude (A).

6. The device (2) according to any of the preceding claims, the device comprising a flexible part (23) in the longitudinal direction (Z).

7. The device (2) according to any of the preceding claims, the first part (21) and the second part (22) forming a single piece.

8. The device (2) according to any of claims 1 to 6, the first part (21) and the second part (22) being formed by two pieces that are sealably connected together.

9. The device (2) according to any of the preceding claims, further comprising a measurement means (3) for measuring the pressure (P) inside said device.

10. The device (2) according to any of claims 1 to 9, further comprising a base (4) having a first surface (4a) forming the reference surface and disposed facing the second part (22).

11. The device (2) according to claim 10, the open end (22a) of the second part (22) being configured so as to have at least one point of contact with the base (4) when the device is in the first position (Z1), while allowing the secondary fluid (F) to leave.

12. A method for cleaning an injection device according to any of claims 1 to 11, comprising the following steps:
- a first step of positioning the device in a third position (Z3) located above the first position (Z1) and below or level with the second position (Z2);
- a second step of maintaining the third position (Z3) for a given duration (t);
- a third step of positioning the device in a fourth position (Z4) located below the third position (Z3) and above or level with the first position (Z1);
the fluid (F) being continuously injected into the device (2) for at least all of said steps.

13. The method according to claim 12, the injection device (2) comprising a measurement means (3) for measuring the pressure (P), the first positioning step being initiated when the measured pressure (P) exceeds a maximum pressure threshold (Pmax), and the second maintaining step being carried out until a minimum pressure threshold (Pmin) is reached.

14. An effluent treatment facility comprising an injection device (2) according to any one of claims 1 to 11.

15. The effluent treatment facility comprising an injection device (2) according to any one of claims 1 to 9, and a treatment reactor (1) or tank, the reference surface (4a) being formed by a surface of said reactor or of said tank.
